(19) **Europäisches Patentamt** / **European Patent Office** / **Office européen des brevets**

(11) **EP 3 851 490 B1**

(12) **EUROPEAN PATENT SPECIFICATION**

(45) Date of publication and mention of the grant of the patent:
**02.10.2024 Bulletin 2024/40**

(21) Application number: **19860930.7**

(22) Date of filing: **07.08.2019**

(51) International Patent Classification (IPC):
**C08L 27/16** (2006.01)    **C08J 3/12** (2006.01)
**C08J 3/215** (2006.01)    **C08K 3/01** (2018.01)
**C08K 3/22** (2006.01)    **H01M 4/1391** (2010.01)
**H01M 4/62** (2006.01)    **C09D 127/16** (2006.01)

(52) Cooperative Patent Classification (CPC):
(C-Sets available)
**C08F 114/22; C08F 214/225; C08J 3/12;**
**C08J 3/215; C09D 127/16; H01M 4/0404;**
**H01M 4/1391; H01M 4/623;** C08J 2327/16;
C08J 2427/16; Y02E 60/10            (Cont.)

(86) International application number:
**PCT/JP2019/031093**

(87) International publication number:
**WO 2020/054273 (19.03.2020 Gazette 2020/12)**

(54) **VINYLIDENE FLUORIDE POLYMER POWDER, BINDER COMPOSITION, ELECTRODE MIXTURE, AND PRODUCTION METHOD FOR ELECTRODE**

VINYLIDENFLUORIDPOLYMERPULVER, BINDERZUSAMMENSETZUNG, ELEKTRODENGEMISCH UND HERSTELLUNGSVERFAHREN FÜR ELEKTRODE

POUDRE POLYMÈRE DE FLUORURE DE VINYLIDÈNE, COMPOSITION LIANTE, MÉLANGE POUR ÉLECTRODE, ET PROCÉDÉ DE PRODUCTION POUR ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2018 JP 2018170043**

(43) Date of publication of application:
**21.07.2021 Bulletin 2021/29**

(73) Proprietor: **Kureha Corporation**
**Chuo-ku**
**Tokyo 103-8552 (JP)**

(72) Inventors:
• **IGARASHI, Tamito**
  **Tokyo 103-8552 (JP)**
• **IKEYAMA, Yasufumi**
  **Tokyo 103-8552 (JP)**
• **KOBAYASHI, Shota**
  **Tokyo 103-8552 (JP)**

(74) Representative: **Novagraaf Group**
**Chemin de l'Echo 3**
**1213 Onex / Geneva (CH)**

(56) References cited:
| | |
|---|---|
| **EP-A1- 2 495 265** | **EP-A1- 2 495 273** |
| **WO-A1-2011/052666** | **WO-A1-2011/052666** |
| **WO-A1-2011/052669** | **WO-A1-2011/052669** |
| **JP-A- 2001 502 966** | **JP-A- 2015 103 464** |
| **JP-A- 2016 113 466** | **JP-A- H0 834 820** |
| **JP-A- H07 295 271** | |

(52) Cooperative Patent Classification (CPC): (Cont.)

C-Sets
**C08F 214/225, C08F 220/283;**
**C09D 127/16, C08K 3/01;**
**C09D 127/16, C08K 3/22**

**Description**

**TECHNICAL FIELD**

The present invention relates to a vinylidene fluoride polymer powder and its use. More specifically, the present invention relates to a vinylidene fluoride polymer powder, a binder composition, an electrode mixture using the same, and a method for producing an electrode.

**BACKGROUND ART**

Vinylidene fluoride polymers mainly containing repeating units derived from vinylidene fluoride are widely used as binder resins for batteries such as lithium ion secondary batteries. The binder resin is used to adhere an active material to a current collector.

Patent Document 1 discloses a vinylidene fluoride polymer powder having excellent solubility in an aprotic polar solvent such as NMP. In addition, a vinylidene fluoride polymer powder dispersed in NMP at 23°C is disclosed.

Patent Document 2 discloses a method for producing a heat-treated vinylidene fluoride polymer powder, in which a non-heat treated vinylidene fluoride polymer powder is subjected to heat treatment at a temperature of 125°C or higher but lower than the crystal melting temperature (Tm). In addition, a vinylidene fluoride polymer powder dispersed in NMP at 23°C is disclosed.

Citation List

Patent Document

Patent Document 1: WO 2011/052666
Patent Document 2: WO 2011/052669

**SUMMARY OF INVENTION**

Technical Problem

By using a mixture in which the vinylidene fluoride polymer powder disclosed in each of Patent Documents 1 and 2 is dispersed in NMP, as a binder, the amount of organic solvent used that is necessary for adjusting the viscosity of the mixture to a constant level may be reduced as compared to a case where a solution containing the vinylidene fluoride polymer powder dissolved in NMP is used as a binder. However, due to the increase in the temperature of the electrode mixture itself during kneading the electrode mixture, the viscosity of the electrode mixture may increase. Alternatively, the amount of dispersion medium used may increase in order to compensate for this increase in viscosity and keep the viscosity constant.

Therefore, an object of the present invention is to provide a vinylidene fluoride polymer powder that can inhibit dissolution of the vinylidene fluoride polymer powder in the dispersion medium and reduce the amount of the dilution solvent used, as well as can inhibit an increase in viscosity of an electrode mixture when the vinylidene fluoride polymer powder is dispersed in the electrode mixture.

Solution to Problem

In order to solve the problems described above, the vinylidene fluoride polymer powder according to one aspect of the present invention is a vinylidene fluoride polymer powder having a median diameter of 50 $\mu$m or less as determined by a laser diffraction scattering method,

in which the vinylidene fluoride polymer powder has a maximum melting peak temperature Tm1 of 130°C or higher at a first heating in differential scanning calorimetry, and

the temperature at which a shear viscosity of a dispersion obtained by dispersing the vinylidene fluoride polymer powder in N-methylpyrrolidone at a concentration of 6 wt.% becomes equal to 5 times as great as the shear viscosity thereof at 30°C, is 44°C or higher and lower than 80°C,

where the shear viscosity is defined as a value measured at a shear rate of 100 s$^{-1}$ using a parallel plate rheometer while heating is performed from 25°C to 80°C at a temperature increasing rate of 5°C/min.

Advantageous Effects of Invention

An electrode mixture in which an increase in viscosity is inhibited can be produced by the vinylidene fluoride polymer powder of the present invention.

**BRIEF DESCRIPTION OF THE DRAWINGS**

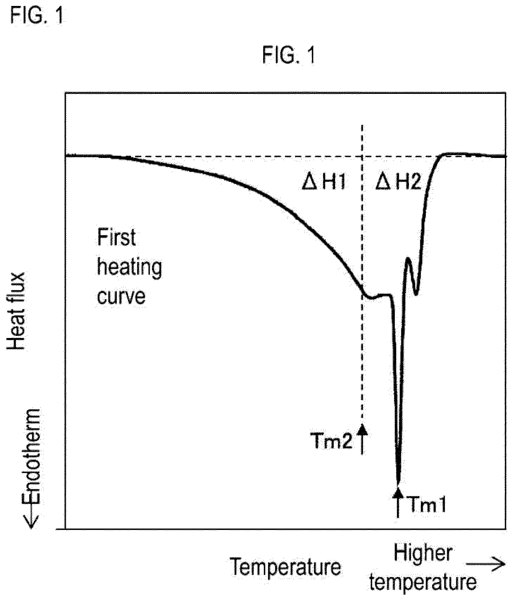

FIG. 1 is a reference diagram illustrating ΔH1 and ΔH2 in differential scanning calorimetry.

**DESCRIPTION OF EMBODIMENTS**

The vinylidene fluoride polymer powder according to the present embodiment is a vinylidene fluoride polymer powder having a median diameter of 50 μm or less as determined by a laser diffraction scattering method,

in which the vinylidene fluoride polymer powder has a maximum melting peak temperature Tm1 of 130°C or higher at a first heating in differential scanning calorimetry, and
the temperature at which a shear viscosity of a dispersion obtained by dispersing the vinylidene fluoride polymer powder in N-methylpyrrolidone at a concentration of 6 wt.% becomes equal to 5 times as great as the shear viscosity thereof at 30°C, is 44°C or higher and lower than 80°C,
where the shear viscosity is defined as a value measured at a shear rate of $100 \text{ s}^{-1}$ using a parallel plate rheometer while heating is performed from 25°C to 80°C at a temperature increasing rate of 5°C/min.

Vinylidene fluoride polymer powder

In the present specification, "vinylidene fluoride polymer" includes both a homopolymer of vinylidene fluoride, and a copolymer of vinylidene fluoride and a monomer copolymerizable with vinylidene fluoride. The monomer copolymerizable with vinylidene fluoride can be appropriately selected from, for example, known monomers. When vinylidene fluoride is copolymerized, it is preferable to contain at least 90 mol% of vinylidene fluoride units, and particularly preferable to contain at least 95 mol% of vinylidene fluoride units.

Monomer

As the monomer, (i) vinylidene fluoride alone, or (ii) a mixture of vinylidene fluoride and a monomer copolymerizable with vinylidene fluoride can be used. Examples of the monomer copolymerizable with vinylidene fluoride include fluorine-containing compounds such as vinyl fluoride, trifluoroethylene, tetrafluoroethylene, chlorotrifluoroethylene, hexafluoropropylene, and perfluoroalkyl vinyl ether. Further, ethylene, maleic acid and its ester, (meth)acrylic acid and its ester, and allyl glycidyl ether can also be used as a fluorine-free monomer.

Median Diameter

The vinylidene fluoride polymer powder according to the present embodiment has a median diameter of 50 μm or less, preferably 40 μm or less, more preferably 30 μm or less, and 0.1 μm or greater, preferably 0.5 μm or greater, and more preferably 1 μm or greater, as determined by a laser diffraction scattering method. In the present specification, the median diameter of the vinylidene fluoride polymer powder is defined by the particle size (D50) at an integrated value of 50% in a volume-based particle size distribution determined by a wet laser diffraction scattering method. When the median diameter is within the range described above, the vinylidene fluoride polymer powder is suitable as a raw material of the electrode mixture. In addition, when used as a raw material of the electrode mixture, the vinylidene fluoride polymer powder has a median diameter of preferably less than or equal to the thickness of the coated electrode mixture layer before drying, and more preferably less than or equal to the particle size of an active material.

Measurement by the laser diffraction scattering method can be performed using, for example, a MICROTRAC MT3300EXII (measurement range from 0.02 to 2000 μm) available from MicrotracBEL Corp. and an automatic sample circulator, and using water as a dispersion medium. In addition, in order to wet the vinylidene fluoride polymer powder in water, a dispersion in which the vinylidene fluoride polymer powder has been wetted with ethanol in advance and then dispersed in water using an aqueous wetting agent solution can be used as a sample for measurement.

Shear viscosity

In the vinylidene fluoride polymer powder according to the present embodiment, the temperature at which the shear viscosity of a dispersion obtained by dispersing the vinylidene fluoride polymer powder in N-methylpyrrolidone at a concentration of 6 wt.% becomes equal to 5 times as great as the shear viscosity thereof at 30°C, is 44°C or higher, preferably 48°C or higher, and more preferably 52°C or higher, where the shear viscosity is defined as a value measured at a shear rate of 100 s$^{-1}$ using a parallel plate rheometer while heating is performed from 25°C to 80°C at a temperature increasing rate of 5°C/min. The upper limit of the temperature at which the shear viscosity is equal to 5 times as great as the shear viscosity at 30°C is lower than 80°C, preferably lower than 70°C, and more preferably lower than 65°C. When having the shear viscosity satisfying such conditions, the vinylidene fluoride polymer powder contains more crystalline components having high stability. By using the vinylidene fluoride polymer powder containing a high amount of crystalline component having high stability as the raw material of the electrode mixture, an electrode mixture that can inhibit dissolution of the vinylidene fluoride polymer powder in the dispersion medium when the vinylidene fluoride polymer powder is dispersed in the electrode mixture, and that has a low viscosity at high temperatures can be obtained. The increase in viscosity of the electrode mixture can be inhibited even in a producing step where shear heating occurs, such as a kneading step for the electrode mixture, and an electrode mixture having a small amount of a dilution solvent used can be obtained. Further, when heating and drying the electrode using hot air or an IR heater, the vinylidene fluoride polymer powder dissolves in the dispersion medium due to an increase in the temperature of the electrode mixture, and exhibits adhesiveness.

The shear viscosity at 25°C is preferably from 2 to 3000 mPa•s, more preferably from 2 to 500 mPa•s, and even more preferably from 3 to 100 m Pa•s.

A ratio of the shear viscosity at 40°C to the shear viscosity at 30°C is from 0.2 to 4, more preferably from 0.7 to 3.5, and even more preferably from 0.8 to 2. A ratio of the shear viscosity at 45°C to the shear viscosity at 30°C is from 0.2 to 10, more preferably from 0.5 to 5, and even more preferably from 0.7 to 2.5.

The shear viscosity at 25°C can be lowered by, for example, increasing the crystallinity of the vinylidene fluoride polymer (e.g., heat treating the vinylidene fluoride polymer at a temperature of its melting point or higher and gradually cooling the sample after the heat treatment). Further, it is preferable that the shear viscosity at 25°C is low and the ratio of the shear viscosity at 40°C to the shear viscosity at 30°C is also small.

When the vinylidene fluoride polymer powder according to the present embodiment is used as the raw material of the electrode mixture, the increase in viscosity of the electrode mixture particularly at about room temperature is inhibited, and thus, it is possible to inhibit the amount of the solvent used, such as the dispersion medium.

Thermal characteristic of vinylidene fluoride polymer powder

Differential scanning calorimetry

The thermal characteristic of the vinylidene fluoride polymer powder according to the present embodiment is determined under the following temperature increasing/lowering conditions.

First heating: Temperature increasing from 30°C to 230°C at a rate of 5°C per minute
First cooling: Temperature lowering from 230°C to 30°C at a rate of 5°C per minute
Second heating: Temperature increasing from 30°C to 230°C at a rate of 5°C per minute

Maximum melting peak temperature Tm1

For the vinylidene fluoride polymer powder according to the present embodiment, the maximum melting peak temperature Tm1 at the first heating in the differential scanning calorimetry is preferably 130°C or higher, more preferably 145°C or higher, and even more preferably 155°C or higher. When the temperature is within the range described above, the vinylidene fluoride polymer powder contains more crystalline components having high stability and it is possible to reduce the amount of the dispersion medium used. The maximum melting peak temperature is the temperature at the apex of the melting peak having the highest peak intensity.

## ΔH2/ΔH1

The rH of the vinylidene fluoride polymer powder is preferably from 0.3 to 3, more preferably from 0.5 to 2, and even more preferably from 0.6 to 1.5. Here, rH is a ratio from ΔH2 to ΔH1 (ΔH2/ΔH1). ΔH1 is a peak area on the lower temperature side than the maximum melting peak temperature Tm2 at the second heating in the differential scanning calorimetry, in the differential scanning calorimetry curve obtained at the first heating in the differential scanning calorimetry. ΔH2 is a peak area on the higher temperature side than Tm2. When the ratio is within the range described above, there is exhibited an effect that the vinylidene fluoride polymer powder contains more crystalline components having high stability.

The ΔH2 and ΔH1 can be determined, for example, as follows. FIG. 1 is a reference diagram illustrating ΔH1 and ΔH2 in differential scanning calorimetry. In the differential scanning calorimetry curve obtained at the first heating in the differential scanning calorimetry, a baseline is drawn before and after the melting peak and subtracted from the heat flux. The differential scanning calorimetry curve where the baseline has been subtracted is then bounded by Tm2. Then, the area on the lower temperature side than Tm2 is denoted by ΔH1, and the area on the higher temperature side than Tm2 is denoted by ΔH2.

The aforementioned rH can be adjusted, for example, by heating vinylidene fluoride polymer particles. For example, rH can be set within a desired range by changing the heat treatment temperature and heat treatment time at a temperature of the melting point or higher, and cooling conditions.

The relationship between Tm1 and Tm2 preferably satisfies Tm2 + 2°C ≤ Tm 1 ≤ Tm2 + 20°C, more preferably Tm2 + 3.5°C ≤ Tm 1 ≤ Tm2 + 15°C, and even more preferably Tm2 + 5°C ≤ Tm1 ≤ Tm2 + 10°C. When the relationship between Tm1 and Tm2 is within the aforementioned temperature range, there is exhibited an effect that the vinylidene fluoride polymer powder contains more crystalline components having high stability.

The vinylidene fluoride polymer powder according to the present embodiment has a weight average molecular weight from preferably 100000 to 10000000, more preferably from 200000 to 5000000, and even more preferably from 500000 to 2000000 by gel permeation chromatography (GPC) in calibration with polystyrene.

The vinylidene fluoride polymer powder according to the present embodiment can be produced, for example, by a method of producing a vinylidene fluoride polymer powder described below.

Method for producing vinylidene fluoride polymer powder

An example of a method for producing a vinylidene fluoride polymer powder will be described in detail below, but the method of producing the vinylidene fluoride polymer powder according to the present embodiment is not limited to the following method.

The method for producing the vinylidene fluoride polymer powder according to the present embodiment includes: a preparation step of preparing an untreated vinylidene fluoride polymer powder that has not been heated; and a heating step of heating the untreated vinylidene fluoride polymer powder at a temperature of Tm°C or higher when the maximum melting peak temperature of the untreated vinylidene fluoride polymer powder at a first heating in the differential scanning calorimetry is Tm.

Preparation step

In the preparation step, untreated vinylidene fluoride polymer powder may adopt a commercially available product, or may be prepared using known means. For example, the vinylidene fluoride polymer may be subjected to freeze pulverization or pulverization by classification, or the vinylidene fluoride polymer may be polymerized using a suspension polymerization method, an emulsion polymerization method, a solution polymerization method, or a micro suspension polymerization method, or these methods may be combined.

Heating step

In the heating step, the untreated vinylidene fluoride polymer powder is heated at a temperature of preferably Tm°C or higher, more preferably Tm + 2°C or higher, and even more preferably Tm + 4°C or higher. Furthermore, the upper limit of the heat treatment temperature is preferably 230°C or lower, more preferably Tm + 20°C or lower, and even more preferably Tm + 10°C or lower. Here, Tm is the maximum melting peak temperature of the untreated vinylidene fluoride polymer powder at the first heating in the differential scanning calorimetry.

By heating in the aforementioned temperature range, a more stable crystal can be formed by melting overhalf of the crystals of the vinylidene fluoride polymer powder and recrystallizing the melted crystals at high temperatures. That is, it is possible to form more crystalline components having high stability by crystallizing at high temperatures while increasing the ratio of the melted components. Then, by using the vinylidene fluoride polymer powder containing a high amount of crystalline component having high stability, an electrode mixture having a low viscosity even at high temperatures can be obtained. When heat treatment is performed for a long period of time at a temperature such as much greater than 230°C, the vinylidene fluoride polymer may undergo thermal decomposition, which is not preferable. In addition, by performing heat treatment at a temperature of Tm + 20°C or lower, recrystallization in the cooling step can be efficiently performed.

The heating time is not particularly limited, but is preferably from 10 seconds to 72 hours, more preferably from 1 minute to 20 hours, and even more preferable from 10 minutes to 5 hours. When the heating time described above is used, it is possible to form more crystalline components having good productivity and high stability.

A known means can be used for heating. For example, the untreated vinylidene fluoride polymer powder may be heated in a static state, the polymer may be heated under stirring, or may be heated under high shear. Furthermore, heating may be performed using a hot air circulation furnace, a conical blender dryer, a Henschel mixer, a ribbon blender, or a fluidized bed heat treatment furnace. Furthermore, heating of the vinylidene fluoride polymer powder can be performed by dispersing the vinylidene fluoride polymer in a poor solvent. For example, an aqueous suspension of a vinylidene fluoride polymer obtained by suspension polymerization or an aqueous emulsion of a vinylidene fluoride polymer obtained by an emulsion polymerization method may be heated under pressure using an autoclave.

After heating, the heated vinylidene fluoride polymer powder is preferably cooled in order to advance crystallization of the amorphous phase. Cooling may be performed under quenching conditions or slow cooling conditions, but cooling under slow cooling conditions allows more crystalline components having high stability to be formed. For example, the heated vinylidene fluoride polymer powder may be quenched using a coolant or cooled at a rate of 0.1°C to 60°C per minute. In the case of slow cooling, the heated vinylidene fluoride polymer powder does not need to be slowly cooled to room temperature, and may be quenched after slow cooling. At this time, slow cooling to 150°C is preferable, and slow cooling to 140°C is more preferable.

When the heating is performed in a poor solvent, it is possible to perform drying by a common drying method, such as a tray dryer, a conical dryer, a fluidized bed dryer, an air drier, or a spray drier.

Furthermore, the vinylidene fluoride polymer powder after heating may be crushed or pulverized before being dispersed or mixed in a dispersion medium, for example.

Method for producing polymer granule

The polymer powder can be utilized in the form of polymer granules. The polymer granules will be described below.

An example of a method for producing a polymer granule will be described in detail below, but the method for producing the polymer granule according to the present embodiment is not limited to the following method.

The method for producing the polymer granule according to the present embodiment includes a granulation step of performing granulation using the aforementioned vinylidene fluoride polymer powder by a dry granulation method or a wet granulation method.

Granulation step

In the granulation step, the vinylidene fluoride polymer powder is used to perform granulation by a dry granulation method or a wet granulation method. The dry granulation method can be performed by a known method using, for example, a roller compactor, a pharmapactor, or a chill sonator. The wet granulation method can be performed by a known method using a spray dryer, or a fluidized bed granulator.

In the granulation step of performing granulation by the wet granulation method, it is preferable to use at least one polymer selected from the group consisting of polyvinylidene fluoride, polyacrylonitrile, nitrile rubber, poly(meth)acrylic acid and esters thereof, polyvinylpyrrolidone, polyvinyl alcohol, polyvinyl acetal, polyvinyl butyral, and cellulose ether as a binding agent. By using a binding agent, it is possible to easily bond the vinylidene fluoride polymer powders together.

When the amount of the polymer granule is 100 parts by weight, the binding agent is contained in an amount of preferably from 0.1 to 30 parts by weight, more preferably from 0.5 to 20 parts by weight, and even more preferably from 1 to 10 parts by weight.

Binder composition

The binder composition according to the present embodiment contains the vinylidene fluoride polymer powder described above and a dispersion medium containing an aprotic polar solvent. The binder composition is a dispersion of vinylidene fluoride polymer powder, and the powder is heated and dissolved in the dispersion to thereby form a uniform medium having viscosity. The binder composition is used, for example, to bind an active material to a current collector in an electrode that is included in a battery and obtained by forming an electrode mixture layer containing the active material on the current collector. In the binder composition according to the present embodiment, the binder composition may further contain another polymer as long as the desired effect is not impaired. Examples of another polymer include polymers other than the aforementioned vinylidene fluoride polymer powders, such as vinylidene fluoride polymer powder that has not been heated.

When another polymer is contained in the binder composition, the compounding ratio between the vinylidene fluoride polymer powder and another polymer can be appropriately selected according to the purpose.

Dispersion medium

The dispersion medium may be a liquid capable of dispersing the vinylidene fluoride polymer powder and allowing the vinylidene fluoride polymer powder to dissolve at room temperature or by heating at a temperature lower than the melting point thereof. The dispersion medium contains an aprotic polar solvent. The dispersion medium is not particularly limited as long as it is a solvent capable of dissolving the vinylidene fluoride polymer powder. As the dispersion medium, one type of solvent may be used or a mixed solvent in which two or more types are mixed may be used, but one type of solvent is preferably used, and it is possible to reduce recovery or repurification costs of the solvent.

Aprotic polar solvent

It is sufficient that the aprotic polar solvent can dissolve the vinylidene fluoride polymer powder by heating, and for example, a good solvent or latent solvent for the vinylidene fluoride polymer powder can be used. The aprotic polar solvent has a relative permittivity of preferably 15 or higher, more preferably 22 or higher, and even more preferably 30 or higher.

Examples of the aprotic polar solvents include N-methylpyrrolidone (NMP), dimethylformamide (DMF), N,N-dimethylacetamide (DMAc), N,N-dimethylsulfoxide (DMSO), $\gamma$-butyrolactone, propylene carbonate, and cyclohexanone.

The aprotic polar solvent is preferably a good solvent for the vinylidene fluoride polymer powder. Specifically, NMP, DMF, DMAc, or DMSO is preferably used.

When the amount of the dispersion medium is 100 parts by weight, the aprotic polar solvent is contained in an amount of preferably 65 parts by weight or greater, more preferably 80 parts by weight or greater, and even more preferably 90 parts by weight or greater.

The binder composition can be prepared, for example, by dispersing the vinylidene fluoride polymer powder in the dispersion medium.

Electrode mixture

The electrode mixture according to the present embodiment contains the vinylidene fluoride polymer powder described above; an active material; and a dispersion medium containing an aprotic polar solvent. That is, the electrode mixture contains the binder composition described above and an active material, and an electrode can be produced by coating the current collector with the electrode mixture to form an electrode mixture layer. The electrode mixture of the present embodiment is preferably an electrode active material for a positive electrode, that is, an electrode mixture for a positive electrode using a positive electrode active material (positive electrode material).

Active material

The electrode mixture can be an electrode mixture for a positive electrode or an electrode mixture for a negative electrode by changing the type of active material depending on the type of current collector to be coated.

Lithium composite metal oxides are typically used as the positive electrode active material.

Examples of the lithium composite metal oxide include $LiMnO_2$, $LiMn_2O_4$, $LiCoO_2$, $LiNiO_2$, $LiNi_xCo_{1-x}O_2$ ($0 < x < 1$), $LiNi_xCo_yMn_{1-x-y}O_2$ ($0 < x < 1$, $0 < y$ 1), and $LiFePO_4$.

Previously known materials including carbon-based materials such as graphite can be used as the negative electrode active material.

Water or NMP is widely used as a dispersion medium of the negative electrode mixture. On the other hand, when water is used in the positive electrode mixture, degradation of the active material, or corrosion of an aluminum current collector due to elution of an alkali component, may occur. Therefore, the positive electrode active material in which water can be used as the dispersion medium is limited, and NMP is mainly used as the dispersion medium. In the electrode mixture according to the present embodiment, the active material is preferably a positive electrode active material, in that the effect of the present invention can be sufficiently exhibited.

The particle size of the active material is preferably from 0.5 to 50 $\mu$m, more preferably from 1 to 25 $\mu$m, and even more preferably from 2 to 15 $\mu$m.

When the amount of the active material is 100 parts by weight, the dispersion medium is contained in an amount from preferably 10 to 100 parts by weight, more preferably from 20 to 75 parts by weight, and even more preferably from 25 to 50 parts by weight.

Dispersion stabilizer

The electrode mixture according to the present embodiment may include a dispersion stabilizer. The dispersion stabilizer is a polymer used in a state of being dissolved in the dispersion medium in the electrode mixture, and is different from the aforementioned vinylidene fluoride polymer powder used in a state of being dispersed in the dispersion medium. Examples of the dispersion stabilizer that can be used include polyvinylidene fluoride, polyacrylonitrile, nitrile rubber, poly(meth)acrylic acid and esters thereof, polyvinylpyrrolidone, polyvinyl alcohol, polyvinyl acetal, polyvinyl butyral, and cellulose ether. By using a polyvinylidene fluoride as the dispersion stabilizer, it is possible to provide both the function as a dispersion stabilizer and the function as a binder, which is preferable. It is particularly preferable to use a modified vinylidene fluoride polymer having a polar functional group.

When the amount of the active material is 100 parts by weight, the dispersion stabilizer is contained in an amount of preferably from 0.1 to 10 parts by weight, more preferably from 0.2 to 5 parts by weight, and even more preferably from 0.3 to 2 parts by weight. Here, the amount of the dispersion stabilizer refers to the amount of resin component.

When the amount of the active material is 100 parts by weight, the vinylidene fluoride polymer powder and the dispersion stabilizer are contained in a total amount of preferably from 0.2 to 20 parts by weight, more preferably from 0.4 to 10 parts by weight, and even more preferably from 0.6 to 4 parts by weight.

In addition, in the electrode mixture, the weight ratio of vinylidene fluoride polymer powder to dispersion stabilizer (vinylidene fluoride polymer powder: dispersion stabilizer) is preferably from 10:90 to 99:1, more preferably from 25:75 to 95:5, and even more preferably from 40:60 to 90:10.

By containing the dispersion stabilizer, the stability of the electrode mixture, and the coating property to the current collector can be improved.

TC10 of the electrode mixture is preferably 50°C or higher, more preferably 55°C or higher, and even more preferably 58°C or higher. The upper limit of TC10 is preferably 80°C or lower, more preferably 70°C or lower, and even more preferably 62°C or lower.

Here, TC10 is a temperature at which the complex viscosity becomes equal to 10 times as great as the complex viscosity at 30°C when the complex viscosity is measured at an angular frequency of 10 rad$^{-1}$ while the electrode mixture is heated from 25°C to 80°C at a temperature increasing rate of 5°C/min using a parallel plate rheometer. When TC10 is in the above temperature range, the increase in viscosity of the electrode mixture in the kneading step for the electrode mixture is inhibited, and thus, there is exhibited an effect that the amount of solvent used such as the dispersion medium in the electrode mixture is reduced. In addition, when heated by hot air or an IR heater in the drying step, the vinylidene fluoride polymer powder in the electrode mixture dissolves and the viscosity of the electrode mixture increases, and the electrode mixture expresses adhesiveness.

The aforementioned complex viscosity can be adjusted by changing the heat treatment temperature, heat treatment time, or cooling conditions in the process of heat treating the untreated vinylidene fluoride polymer according to the present embodiment at a temperature of the melting point or higher.

Other components

The electrode mixture according to the present embodiment may contain other components as long as the effects of the present invention are not impaired. Examples of the other components include a conductive additive and a pigment dispersant.

Conductive additive

A conductive additive is added for the purpose of improving the conductivity of the electrode mixture layer in the case of using an active material having low electrical conductivity such as $LiCoO_2$. Examples of the conductive additive that can be used include carbonaceous materials such as carbon black, carbon nanotubes, graphite fine powder, and graphite fiber; and metal fine powder or metal fiber such as nickel and aluminum.

Additive

For example, any or a combination of additives such as a phosphorus compound, a sulfur compound, an organic acid, a nitrogen compound such as an amine compound and an ammonium compound; an organic ester, and various types of silane-based, titanium-based, and aluminum-based coupling agents can be used.

The electrode mixture according to the present embodiment uses an aprotic polar solvent such as NMP as a main component in a dispersion medium, does not need to use water as the dispersion medium, and can also contain an active material having a high alkalinity. In addition, it is possible to use a good solvent or a latent solvent alone as the dispersion medium, and it is not necessary to consider optimization of the solvent composition. Also, the setting of the drying conditions and the recycling of the solvent after coating of the current collector with the electrode mixture are facilitated.

Further, by including the vinylidene fluoride polymer powder described above as the total mass or part of the binder, the electrode mixture according to the present embodiment can be adjusted as an electrode mixture having a high solid content concentration while having a shear viscosity suitable for coating a current collector.

Furthermore, since the electrode mixture according to the present embodiment contains the vinylidene fluoride polymer powder described above, when the electrode mixture is applied to the current collector and heated by hot air or an IR heater in a drying apparatus, the vinylidene fluoride polymer powder dissolves or swells in the electrode mixture due to an increase in the temperature. Then, the viscosity of the electrode mixture increases, and adhesiveness is imparted to the electrode.

The electrode mixture according to the present embodiment can be prepared, for example, by mixing a binder composition prepared by dispersing the vinylidene fluoride polymer powder described above in a dispersion medium, with an active material or a dispersion containing an active material.

Method for producing electrode

An example of a method for producing an electrode will be described in detail below, but the method for producing the electrode according to the present embodiment is not limited to the following method.

The method for producing an electrode according to the present embodiment includes: a preparation step of preparing an electrode mixture; and a coating step of coating a current collector with the electrode mixture, the preparation step includes a mixing step of mixing the vinylidene fluoride polymer powder with the active material or the active material and the dispersion medium, and

the temperature of the electrode mixture is maintained at a temperature of the melting point or higher of the maximum component constituting the dispersion medium and 60°C or lower during a time from the mixing step to the coating step.

Here, "electrode" as used herein refers to an electrode of a battery in which an electrode mixture layer formed from the electrode mixture of the present embodiment is formed on a current collector, unless otherwise specified.

Electrode mixture preparation step

In the electrode mixture preparation step, it is preferable to add at least one dispersion stabilizer selected from the group consisting of polyvinylidene fluoride, polyacrylonitrile, nitrile rubber, poly(meth)acrylic acid and esters thereof, polyvinylpyrrolidone, polyvinyl alcohol, polyvinyl acetal, polyvinyl butyral, and cellulose ether to the electrode mixture.

In the preparation step, a dispersion in which the vinylidene fluoride polymer powder has been dispersed in advance in the dispersion medium is preferably mixed with the active material or a dispersion containing the active material.

In addition, in the preparation step, the active material or the dispersion containing the active material is preferably mixed with the vinylidene fluoride polymer powder. In the case where previously known vinylidene fluoride polymer powder is mixed with an active material while remaining in a powder form and a dispersion medium is added to the mixture, or in the case where such powder is mixed with a dispersion containing the active material, the temperature of the electrode mixture increases due to shear heat release in the kneading step. Then, the vinylidene fluoride polymer powder is gradually dissolved in the electrode mixture to increase the viscosity of the electrode mixture, and therefore, it is difficult to adjust the viscosity of the electrode mixture constant. In addition, since the viscosity of the electrode mixture is increased by dissolving the vinylidene fluoride polymer in the dispersion medium, it is necessary to adjust the viscosity of the mixture to a desired value by adding a large amount of a dilution solvent. On the other hand, even in the case where the vinylidene fluoride polymer powder described above is mixed with an active material while remaining in a powder form, a dispersion medium is added thereto, and the mixture is further mixed, or even in the case where such powder is mixed with a dispersion containing the active material, viscosity change caused by dissolution of the vinylidene fluoride polymer powder in the dispersion medium is inhibited. Thus, since the viscosity of the electrode mixture is kept at a low value, the amount of the dilution solvent added can be inhibited, and the cost for the electrode production process can be reduced and thus, productivity can be improved.

Coating step

In the coating step, the electrode mixture is applied to the current collector. As described above, when an electrode mixture for a positive electrode is used to obtain an electrode mixture layer, the electrode is a positive electrode, and when an electrode mixture for a negative electrode is used to obtain an electrode mixture layer, the electrode is a negative electrode.

Current collector

The current collector is a base material of the electrode and is a terminal for outputting electricity. Examples of materials for the current collector include iron, stainless steel, steel, copper, aluminum, nickel, and titanium. The shape of the current collector is preferably a foil or a mesh. In the case where the electrode is positive, the current collector is preferably an aluminum foil. The thickness of the current collector is preferably from 1 to 100 $\mu$m, and more preferably from 3 to 20 $\mu$m.

The electrode mixture layer is a layer obtained by coating the current collector with the aforementioned electrode mixture, and drying it. A known method in the technical field can be used as the method for coating with the electrode mixture, and examples thereof include methods that use a bar coater, a die coater, or a comma coater. The drying temperature for forming the electrode mixture layer is preferably from 60°C to 200°C, and more preferably from 80°C to 150°C. When the drying temperature is within this range, it is possible to promote the dissolution of the vinylidene fluoride polymer powder described above by increasing the temperature of the mixture in the drying step, and an electrode with high peel strength can be obtained. In addition, the thickness of the electrode mixture layer is preferably from 30 to 600 $\mu$m per side. The electrode mixture layer may be formed on both surfaces or only on either surface of the current collector.

The thickness of the electrode mixture layer is usually from 50 to 500 $\mu$m per side, and preferably from 70 to 350 $\mu$m per side. The electrode mixture layer may also be pressed to increase the density. The loading of the electrode mixture layer is usually from 50 to 1000 g/m$^2$, and preferably from 100 to 500 g/m$^2$.

The temperature of the electrode mixture is maintained preferably at a temperature of the melting point or higher of the maximum component constituting the dispersion medium and 60°C or lower, more preferably 0°C or higher and 50°C or lower, and even more preferably 5°C or higher and 45°C or lower from the mixing step to the coating step. By maintaining the temperature of the electrode mixture within the temperature range described above, an increase in viscosity of the electrode mixture is inhibited, and the stability of the electrode mixture, and the coating property to the current collector can be improved.

The electrode according to the present embodiment can be used, for example, as a positive electrode of a non-aqueous electrolyte secondary battery such as a lithium-ion secondary battery.

## SUMMARY

The vinylidene fluoride polymer powder according to the present embodiment is a vinylidene fluoride polymer powder having a median diameter of 50 $\mu$m or less as determined by a laser diffraction scattering method,

in which the vinylidene fluoride polymer powder has a maximum melting peak temperature Tm1 of 130°C or higher at a first heating in differential scanning calorimetry, and
the temperature at which a shear viscosity of a dispersion obtained by dispersing the vinylidene fluoride polymer powder in N-methylpyrrolidone at a concentration of 6 wt.% becomes equal to 5 times as great as the shear viscosity thereof at 30°C, is 44°C or higher and lower than 80°C,
where the shear viscosity is defined as a value measured at a shear rate of 100 s$^{-1}$ using a parallel plate rheometer while heating is performed from 25°C to 80°C at a temperature increasing rate of 5°C/min.

In addition, as for the vinylidene fluoride polymer powder according to the present embodiment, in a differential scanning calorimetry curve obtained at a first heating in the differential scanning calorimetry, when the peak area on the lower temperature side than the maximum melting peak temperature Tm2 at the second heating in the differential scanning calorimetry is $\Delta$H1, and the peak area on the higher temperature side than Tm2 is $\Delta$H2, a ratio of $\Delta$H2 to $\Delta$H1, namely $\Delta$H2/$\Delta$H1, is preferably 0.3 or greater and 3 or less.

Furthermore, the relationship between the Tm1 and the Tm2 preferably satisfies $Tm2 + 2°C \leq Tm1 \leq Tm2 + 20°C$.

The method for producing the vinylidene fluoride polymer powder according to the present embodiment includes:

a preparation step of preparing an untreated vinylidene fluoride polymer powder that has not been heated; and
a heating step of heating the untreated vinylidene fluoride polymer powder at a temperature of Tm°C or higher when the maximum melting peak temperature of the untreated vinylidene fluoride polymer powder at a first heating in the differential scanning calorimetry is Tm.

The method for producing a vinylidene fluoride polymer granule according to the present embodiment includes a granulation step of performing granulation using the vinylidene fluoride polymer powder by a dry granulation method.

The method for producing a vinylidene fluoride polymer granule according to the present embodiment includes a granulation step of performing granulation using the vinylidene fluoride polymer powder by a wet granulation method.

In the granulation step, it is preferable to use at least one binding agent selected from the group consisting of polyvinylidene fluoride, polyacrylonitrile, nitrile rubber, poly(meth)acrylic acid and esters thereof, polyvinylpyrrolidone, polyvinyl alcohol, polyvinyl acetal, polyvinyl butyral, and cellulose ether.

The binder composition according to the present embodiment contains a vinylidene fluoride polymer powder and a dispersion medium containing an aprotic polar solvent.

The electrode mixture according to the present embodiment contains a vinylidene fluoride polymer powder; an active material; and a dispersion medium containing an aprotic polar solvent.

The active material is preferably a lithium composite metal oxide.

The method for producing an electrode according to the present embodiment includes: a preparation step of preparing an electrode mixture; and a coating step of coating a current collector with the electrode mixture,

> the preparation step includes a mixing step of mixing the vinylidene fluoride polymer powder with the active material or the active material and the dispersion medium, and
> the temperature of the electrode mixture is maintained at a temperature of the melting point or higher of the maximum component constituting the dispersion medium and 60°C or lower during a time from the mixing step to the coating step.

The electrode mixture obtained in the preparation step preferably contains a dispersion stabilizer in which at least one polymer selected from the group consisting of polyvinylidene fluoride, polyacrylonitrile, nitrile rubber, poly(meth)acrylic acid and esters thereof, polyvinylpyrrolidone, polyvinyl alcohol, polyvinyl acetal, polyvinyl butyral, and cellulose ether is dissolved in the dispersion medium.

In the preparation step, a dispersion in which the vinylidene fluoride polymer powder has been dispersed in advance in the dispersion medium is preferably mixed with the active material or a dispersion containing the active material.

In the preparation step, the active material or the dispersion containing the active material is preferably mixed with the vinylidene fluoride polymer powder.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

[Examples]

sPVDF1

An untreated vinylidene fluoride polymer powder sPVDF1 was prepared by the following procedure.

Amounts of 1024 g of ion-exchanged water, 0.2 g of methyl cellulose, 400 g of vinylidene fluoride monomer, 1.2 g of a 50 wt.% diisopropyl peroxydicarbonate-CFC 225cb solution, and 1.9 g of ethyl acetate were charged into an autoclave with a volume of 2 liters, and suspension polymerization was performed at 26°C for 20 hours. The polymerization was terminated when the gage pressure dropped 1.5 MPa from the initial pressure at 26°C. After the polymerization was completed, the polymer slurry was heat-treated for 30 minutes at 95°C. The polymer slurry was then dehydrated, washed with water, and dried again to obtain an untreated vinylidene fluoride polymer powder sPVDF1. Drying was performed under the conditions of a hot air inlet temperature of 140°C and a hot air outlet temperature of 80°C. The obtained untreated vinylidene fluoride polymer powder had a weight average molecular weight of 110 million, a median diameter (D50) of 194 μm, and a Tm1 of 175.7°C.

Mod-PVDF1

An untreated vinylidene fluoride polymer powder Mod-PVDF1 was prepared by the following procedure.

An autoclave with an internal volume of 2 liters was charged with 925 g of ion-exchanged water, 0.65 g of Metolose (trade name) SM-100 (available from Shin-Etsu Chemical Co., Ltd.), 4.0 g of a 50 wt.% diisopropyl peroxydicarbonate-CFC 225cb solution, 421 g of vinylidene fluoride (VDF), and 0.22 g of acryloyloxyethyl succinate (AES), and the temperature was increased to 26°C for 1 hour. After that, a 3 wt.% acryloyloxyethyl succinate aqueous solution was gradually added at a rate of 0.19 g/min while the temperature was maintained at 26°C. A total of 2.92 g of acryloyloxyethyl succinate was added, including the amount added initially. Polymerization was terminated at the same time that addition of the acryloyloxyethyl succinate aqueous solution was ended. The obtained polymer slurry was dehydrated, washed with water, and dried again at 80°C for 20 hours, and thus Mod-PVDF1 was obtained. The weight average molecular weight was 80 million, the median diameter (D50) was 180 $\mu$m, and the Tm1 was 169.3°C.

The obtained VDF/AES copolymer was measured for the introduced amount of AES by $^1$H NMR measurement in the following manner.

$^1$H NMR measurement

The $^1$H NMR spectrum of the copolymer was determined under the following conditions.

Apparatus: AVANCE AC 400FT NMR spectrometer available from Bruker Corp.
Measurement conditions
Frequency: 400 MHz
Measurement solvent: DMSO-$d_6$
Measurement temperature: 25°C

The amount (mol%) of the structural unit derived from vinylidene fluoride (VDF amount) contained in the VDF/AES polymer obtained based on the integrated intensities of the signal observed by $^1$H NMR spectrum at 4.19 ppm originating mainly from AES and the signals observed at 2.24 ppm and 2.87 ppm originating mainly from vinylidene fluoride was 99.64 mol%. In addition, the amount (mol%) of the structural unit derived from acryloyloxyethyl succinate (AES amount) was 0.36 mol%.

ePVDF1

A PVDF powder (trade name: Kynar (trade name) HSV900) available from Arkema Inc. was used as the untreated vinylidene fluoride polymer powder ePVDF1. The weight average molecular weight was 66 million, the median diameter (D50) was 5 $\mu$m, and the Tm1 was 161.0°C.

Production Example 1: Production of vinylidene fluoride polymer powders 1 to 17

As vinylidene fluoride polymer powders 12 and 13, ePVDF1 was used as it was. In the production of vinylidene fluoride polymer powders 1 to 11, 14, and 15, heat treatment, cooling treatment, and post-treatment described below were performed using ePVDF1 as the untreated vinylidene fluoride polymer powder.

As vinylidene fluoride polymer powder 16, sPVDF1 was used as it was, and in the production of vinylidene fluoride polymer powder 17, the heat treatment, cooling treatment, and post-treatment described below were performed using sPVDF1 as the untreated vinylidene fluoride polymer powder.

Heat treatment

On a stainless steel tray having a width of 30 cm, a length of 21 cm, and a height of 2 cm, 8 g of untreated vinylidene fluoride polymer powder was spread evenly over the bottom of the tray. Subsequently, the tray was covered with aluminum foil, placed into a hot air circulation furnace (available from Kusumoto Chemicals, Ltd., trade name: HISPEC HT210S), which was adjusted to a temperature of 162°C, and then maintained for 1 hour.

Cooling

The vinylidene fluoride polymer obtained by the heat treatment was taken out from the hot air circulation furnace while being held on the tray, and placed on a steel plate at room temperature to be quenched. At the 30 second time point, the temperature of the vinylidene fluoride polymer reached 80°C. The vinylidene fluoride polymer was allowed to cool to 30°C under room temperature atmosphere. 4 g of the cooled vinylidene fluoride polymer was placed in a mortar and crushed using a pestle. The crushed vinylidene fluoride polymer was dispersed in ethanol and sieved using a sieve having an opening of 45 $\mu$m while the ethanol was flown down to remove coarse powder. The mixture was held at 60°C for 5 hours to volatilize the ethanol, and vinylidene fluoride polymer powder 1 was obtained.

Further, the vinylidene fluoride polymer powders 2 to 17 were produced by the same procedure as for the vinylidene fluoride polymer powder 1 in the heat treatment conditions, cooling method, and post-treatment method (crushing or pulverization) described in Table 1. Cooling was performed by slow cooling to 100°C at a rate of 0.5°C/min, followed by allowing to cool to room temperature. The post-treatment method (pulverization) was performed using a Cryogenic Sample Crusher JFC - 300 available from Japan Analytical Industry Co., Ltd. Approximately 0.8 g of a heat-treated vinylidene fluoride polymer powder and tungsten carbide steel ball were placed in a sample container and the sample container is capped. The sample was subjected to freeze pulverization under the conditions of pre-cooling for 10 minutes using liquid nitrogen as the coolant, pulverizing time for 15 minutes, and the frequency of reciprocating motion at 1450 rpm to obtain a freeze-pulverized, heat-treated vinylidene fluoride polymer powder. This was repeated 5 times, and the obtained freeze-pulverized, heat-treated vinylidene fluoride polymer powder was dispersed in ethanol and mixed. The mixture was held at 60°C for 5 hours to volatilize the ethanol, and a heat-treated vinylidene fluoride polymer powder was obtained.

Table 1

| | | Vinylidene fluoride polymer powder (polymer powder A) | | |
|---|---|---|---|---|
| | | Untreated vinylidene fluoride polymer powder | Heat treatment Temperature/time | Cooling method | Post-treatment method |
| | 1 | ePVDF1 | 162°C/1h | Quenching | Crushing |
| | 2 | | 162°C/1h | Slow Cooling | Crushing |
| | 3 | | 165°C/1h | Quenching | Pulverization |
| | 4 | | 165°C/1h | Quenching | Pulverization |
| | 5 | | 165°C/1h | Slow Cooling | Pulverization |
| | 6 | | 165°C/1h | Slow Cooling | Pulverization |
| | 7 | | 168°C/1h | Quenching | Pulverization |
| | 8 | | 168°C/1h | Slow Cooling | Pulverization |
| | 9 | | 168°C/1h | Slow Cooling | Pulverization |
| | 10 | | 168°C/1h | Slow Cooling | Pulverization |
| | 11 | | 168°C/1h | Slow Cooling | Pulverization |
| | 12 | | No heat treatment | - | - |
| | 13 | | No heat treatment | - | - |
| | 14 | | 156°C/1h | Quenching | Crushing |
| | 15 | | 159°C/1h | Quenching | Crushing |
| | 16 | sPVDF1 | No heat treatment | - | - |
| | 17 | | 180°C/1h | Quenching | Pulverization |

Evaluation Example 1: Evaluation of vinylidene fluoride polymer powders

[Measurement of viscosity of 6% NMP dispersion]

94 parts by weight of NMP at 25°C was weighed into an Erlenmeyer flask, and 6 parts by weight of vinylidene fluoride polymer powder was added while stirring using a magnetic stirrer, and the mixture was then stirred at 25°C for 3 hours. Viscosity measurement was performed on the obtained dispersion (hereinafter abbreviated as "6% NMP dispersion" in some cases). For the viscosity measurement, a G2 rheometer available from TA Instruments was used, and a gap distance was set to 0.5 mm using a 50 mm parallel plate. Then, the viscosity measurement was performed at a shear rate of 100 $s^{-1}$ at 25°C for 30 seconds to determine the viscosity of the 6% NMP dispersion. Further, the measurement was performed by the same procedure even when the vinylidene fluoride polymer powder was dissolved to form a solution in the preparation operation of the sample.

[Measurement of viscosity of heated dispersion]

The 6% NMP dispersion was used as a sample. For the measurement, a G2 rheometer available from TA Instruments was used, and a gap distance was set to 0.5 mm using a 50 mm parallel plate. A solvent trap kit was used to prevent volatilization of the solvent by heating. The viscosity of the 6% NMP dispersion at each sample temperature was measured while the temperature was increased from 25°C to 80°C at a rate of 5°C per minute at a shear rate of 100 $s^{-1}$. The specific viscosity was then determined by dividing the measured viscosity by the value of the viscosity at 30°C.

The temperature (thickening temperature in Table 2) at which the shear viscosity of the 6% NMP dispersion became equal to 5 times as great as the shear viscosity thereof at 30°C was determined.

[Evaluation of molecular weight by GPC]

The molecular weight of the vinylidene fluoride polymer powder was determined as a weight average molecular weight in calibration of polystyrene by using gel permeation chromatography (available from JASCO Corporation, GPC-900, shodex KD-806M column, temperature of 40°C) in a N-methylpyrrolidone solution in which the vinylidene fluoride polymer powder was dissolved at a concentration of 0.1 wt.%.

[Method of measuring median diameter of vinylidene fluoride polymer powder]

The median diameter was measured using a laser diffraction scattering type particle size distribution measurement device (MICROTRAC MT3300EXII) available from MicrotracBEL Corp. and using water as a medium by a wet method. 0.5 g of vinylidene fluoride polymer powder was wetted with 1 g of ethanol, and then 9 g of water was added and mixed under stirring. Thereafter, 0.6 g of a 1% dilution of SN wet 366 (a wetting agent consisting of an aliphatic polyether type nonionic surfactant) available from San Nopco Ltd. was added and mixed. The aforementioned mixture was introduced into a standard sample circulator to determine the median diameter (D50). In the measurement, a particle permeability was set to permeable mode; a particle shape to nonspherical mode; a particle refractive index to 1.42; and a solvent refractive index to 1.333, respectively.

[Differential scanning calorimetry measurement (DSC measurement)]

DSC measurements of an untreated vinylidene fluoride polymer powder that has not been heated and a vinylidene fluoride polymer powder that has been heated were performed in accordance with JIS K7122-1987 using DSC1 available from Mettler-Toledo.
Approximately 10 mg of sample was precisely weighed into a sample pan made of aluminum. Nitrogen was fed at a flow rate of 50 mL/min and the measurement was performed under the following conditions:

First heating: Temperature increasing from 30°C to 230°C at a rate of 5°C per minute
First cooling: Temperature lowering from 230°C to 30°C at a rate of 5°C per minute
Second heating: Temperature increasing from 30°C to 230°C at a rate of 5°C per minute
The maximum melting peak temperature at the first heating was Tm1, and the maximum melting peak temperature at the second heating was Tm2. In the DSC curve obtained at the first heating, the peak area on the lower temperature side than Tm2 was $\Delta H1$, and the peak area on the higher temperature side than Tm2 was $\Delta H2$. The ratio rH ($\Delta H2/\Delta H1$) of $\Delta H2$ to $\Delta H1$ was calculated.

The evaluation results are shown in Table 2. In Table 2, the thickening temperature indicates a temperature at which the shear viscosity of the 6% NMP dispersion becomes equal to 5 times as great as the shear viscosity thereof at 30°C. Also, "N. D." indicates that in the test range, the temperature has not reached the temperature at which the shear viscosity of the 6% NMP dispersion becomes equal to 5 times as great as the shear viscosity thereof at 30°C.

[Table 2]

| | Vinylidene fluoride polymer powder (polymer powder A) | | | | | | | | |
|---|---|---|---|---|---|---|---|---|---|
| | Tm1 | Tm2 | Tm1-Tm2 | rH | D50 | Viscosity of 6% NMP dispersion | Specific viscosity: 40°C/30°C | Specific viscosity: 45°C/30°C | Thickening temperature |
| | °C | °C | °C | - | μm | mPa s | - | - | °C |
| 1 | 166.4 | 164.3 | 2.1 | 1.02 | 12 | 3.4 | 1.1 | 3.6 | 45.2 |
| 2 | 165.1 | 162.5 | 2.6 | 0.93 | 15 | 3.2 | 3.1 | 3.3 | 51.5 |
| 3 | 169.5 | 165.0 | 4.5 | 0.51 | 9 | 5.8 | 1.2 | 1.6 | 47.2 |
| 4 | 169.5 | 165.0 | 4.5 | 0.51 | 9 | 5.8 | 1.2 | 1.6 | 47.2 |
| 5 | 167.8 | 162.4 | 5.4 | 0.82 | 8 | 2.6 | 1.2 | 1.3 | 58.9 |

(continued)

| | Vinylidene fluoride polymer powder (polymer powder A) | | | | | | | | |
|---|------|------|-------------|------|-----|---------------------------|-----------------------------|-----------------------------|-------------------------|
| | Tm1 | Tm2 | Tm1-Tm2 | rH | D50 | Viscosity of 6% NMP dispersion | Specific viscosity: 40°C/30°C | Specific viscosity: 45°C/30°C | Thickening temperature |
| | °C | °C | °C | - | μm | mPa s | - | - | °C |
| 6 | 167.8 | 162.4 | 5.4 | 0.82 | 8 | 2.6 | 1.2 | 1.3 | 58.9 |
| 7 | 169.5 | 165.0 | 4.5 | 0.43 | 8 | 56.9 | 1.7 | 0.62 | 56.8 |
| 8 | 171.0 | 163.8 | 7.2 | 0.71 | 9 | 2.1 | 0.94 | 0.90 | 59.4 |
| 9 | 171.0 | 163.8 | 7.2 | 0.71 | 9 | 2.1 | 0.94 | 0.90 | 59.4 |
| 10 | 171.0 | 163.8 | 7.2 | 0.71 | 9 | 2.1 | 0.94 | 0.90 | 59.4 |
| 11 | 171.0 | 163.8 | 7.2 | 0.71 | 9 | 2.1 | 0.94 | 0.90 | 59.4 |
| 12 | 161.0 | 163.3 | -2.3 | 0.29 | 5 | 1050 | 0.84 | 0.78 | N.D. |
| 13 | 161.0 | 163.3 | -2.3 | 0.29 | 5 | 1050 | 0.84 | 0.78 | N.D. |
| 14 | 159.6 | 163.5 | -3.9 | 0.24 | 14 | 3.5 | 86 | 600 | 39.4 |
| 15 | 162.7 | 164.1 | -1.4 | 0.22 | 13 | 2.9 | 0.89 | 170 | 42.6 |
| 16 | 175.7 | 172.4 | 3.3 | 1.00 | 194 | 2100 | 0.90 | 0.85 | N.D. |
| 17 | 172.0 | 172.0 | 0.0 | 0.13 | 172 | 2.7 | 2.4 | 2.1 | 53.3 |

[Observation]

As shown in Table 2, in the vinylidene fluoride polymer powders 1 to 11 that had been heated at a temperature of the melting point or higher of the untreated vinylidene fluoride polymer powder, rH (ΔH2/ΔH1) was 0.3 or higher. In all of the vinylidene fluoride polymer powders 1 to 11, Tm1 was higher than Tm2 by 2°C or higher. In addition, the temperature at which the shear viscosity of the 6% NMP dispersion became equal to 5 times as great as the shear viscosity thereof at 30°C was 44°C or higher. The vinylidene fluoride polymer powders 1 to 11 have a viscosity maintained in NMP at room temperature, and are dissolved and thickened at an appropriate temperature. Therefore, it is possible to reduce the viscosities of the binder composition and the electrode mixture or to reduce the amount of dispersion medium used, as compared to the case where the vinylidene fluoride polymer powders have been heated and dissolved in advance.

On the other hand, in the vinylidene fluoride polymer powders 12 to 13 that had not been heated, Tm1 was lower than Tm2 and rH was 0.3 or less. The viscosity of the 6% NMP dispersion was significantly higher than those of the vinylidene fluoride polymer powders 1 to 11, and the temperature in the test range did not reach the temperature at which the shear viscosity of the 6% NMP dispersion became equal to 5 times as great as the shear viscosity thereof at 30°C. From this result, the dissolution of the vinylidene fluoride polymer powder has proceeded at about room temperature, and the effect of reducing the dispersion medium by not dissolving but dispersing the vinylidene fluoride polymer powder in the dispersion medium may not be expected.

In vinylidene fluoride polymer powders 14 to 15 that had been heated at or below the melting point of the untreated vinylidene fluoride polymer powder, Tm1 was lower than Tm2 and rH was 0.3 or less. In addition, the temperature at which the shear viscosity of the 6% NMP dispersion became equal to 5 times as great as the shear viscosity thereof at 30°C was 44°C or lower.

As for the vinylidene fluoride polymer powders 16 to 17 using a different type of untreated vinylidene fluoride polymer powder from the vinylidene fluoride polymer powders 1 to 15, the vinylidene fluoride polymer powder 16 that had not been heated had a significantly higher viscosity of the 6% NMP dispersion than that of the vinylidene fluoride polymer powder 17. In addition, the temperature of the vinylidene fluoride polymer powder 16 in the test range did not reach the temperature at which the shear viscosity of the 6% NMP dispersion became equal to 5 times as great as the shear viscosity thereof at 30°C. From this result, the dissolution of the vinylidene fluoride polymer powder 16 has proceeded at about room temperature, and the effect of reducing the dispersion medium by not dissolving but dispersing the vinylidene fluoride polymer powder in the dispersion medium may not be expected. Further in the vinylidene fluoride polymer powder 17, Tm1 was substantially equal to Tm2, and rH was 0.3 or less. In addition, it was found that the vinylidene fluoride polymer powders 16 to 17 had a large D50 value, and when it (vinylidene fluoride polymer powder 17) was mixed with the electrode mixture without heating and dissolving, the electrode smoothness was poor as shown in Table 3, and the vinylidene fluoride polymer powder was not suitable as a raw material of the electrode mixture.

From the above results, it was found that the vinylidene fluoride polymer powder having a median diameter of 50 µm or less obtained by heating at a temperature of the melting point or higher showed a high rH or the temperature at which the shear viscosity of the 6% NMP dispersion became equal to 5 times as great as the shear viscosity thereof at 30°C, was 44°C or higher, and therefore, more crystal phases with high crystallinity were formed. As a result, it was found that since the vinylidene fluoride polymer powder did not dissolve in the solvent at about room temperature and swelled or dissolved in the solvent in the high temperature region, when used as a raw material of the electrode mixture, the viscosity of the electrode mixture was able to be inhibited.

Production Example 2: Preparation of binder composition

80 parts by weight of NMP at 25°C was weighed into an Erlenmeyer flask, and 20 parts by weight each of the vinylidene fluoride polymer powders 1 to 3, 5 to 11, 14, 15, and 17 was added while stirring using a magnetic stirrer, and the mixture was then stirred at 25°C for 3 hours to prepare a binder composition. The vinylidene fluoride polymer powder 4 was used as powder for the preparation of the mixture.
The vinylidene fluoride polymer powders 12, 13, and 16 were used as a binder composition in NMP at a concentration of 6% by heating and stirring at 70°C for 5 hours to form a solution, and then allowing to cool.

Production Example 2-1: Preparation of dispersion stabilizer

94 parts by weight of NMP at 25°C was weighed into an Erlenmeyer flask, and 6 parts by weight of Mod-PVDF1 or sPVDF1 was added while stirring using a magnetic stirrer, and the mixture was then stirred at 70°C for 5 hours to prepare a solution of a dispersion stabilizer.

Production Example 3: Preparation of electrode mixture

A dispersion containing an active material was prepared using lithium cobaltate (C5H) available from Nippon Chemical Industrial Co., Ltd. as a positive electrode active material, carbon black (SUPER P) available from Imerys Graphite & Carbon as a conductive additive, and N-methylpyrrolidone (NMP) having a purity of 99.8% as a dispersion medium. The compounding ratio was C5H: SUPER P: PVDF: dispersion stabilizer = 100:2:1:1. A binder composition in which the vinylidene fluoride polymer powder 1 described above was dispersed in NMP at a concentration of 20% was used as the PVDF, and a binder solution in which Mod-PVDF1 was dissolved in NMP at a concentration of 6% was used as the dispersion stabilizer.

40 g of C5H and 0.8 g of SUPER P were precisely weighed into a polypropylene container, and mixed by stirring at 800 rpm for 1 minute using a kneader (Awatori Rentaro) available from THINKY Corporation. The mixture was allowed to cool to a sample temperature of 25°C and thereafter, 4.45 g (2/3 of the total amount of the dispersion stabilizer added) of the dispersion stabilizer (6% NMP solution of Mod-PVDF1) and 3.64 g of NMP were added to adjust a nonvolatile content concentration of the mixture to 84%. The added mixture was mixed with a spatula and was thereafter kneaded at 2000 rpm for 3 minutes using the Awatori Rentaro (primary kneading step). Again, the kneaded mixture was allowed to cool to a sample temperature of 25°C and thereafter, 2.00 g of the binder composition, the remaining dispersion stabilizer (2.22 g of the 6% NMP solution of Mod-PVDF1), and 3.1 g of NMP were added to adjust the nonvolatile content concentration of the mixture to 74%. The added mixture was mixed with a spatula and was thereafter kneaded at 800 rpm for 2 minutes using the Awatori Rentaro, and thus, an electrode mixture was obtained (secondary kneading step). The sample temperature after kneading was 28°C. After the preparation of the mixture, the electrode mixture was stored at 25°C.

For vinylidene fluoride polymers 2, 3, 5 to 11, 14, 15, and 17, the mixture was prepared by adjusting the amount of each material added so that the material was the type of the dispersion stabilizer and had the compounding ratio of the vinylidene fluoride polymer powder and the dispersion stabilizer as described in Table 3. The same procedure as in Production Example 3 was performed, except that the amount of NMP added was adjusted so that the nonvolatile content concentration of the slurry was 84% in the primary kneading step, and that the amount of NMP added was adjusted so that the nonvolatile content concentration of the slurry was the N. V. value described in Table 3 in the secondary kneading step. The sample temperature after the addition of the binder composition was 25°C or higher and lower than 30°C.

For vinylidene fluoride polymers 12, 13, and 16, 1/3 of the amount of the binder composition was added in the primary kneading step, and the amount of NMP added was adjusted so that the nonvolatile content concentration of the slurry was 84%. In the secondary kneading step, the remaining binder composition was added and the amount of NMP added was adjusted so that the nonvolatile content concentration of the slurry was the N. V. value described in Table 3. Other operations were performed in the same manner as in Production Example 3.

For vinylidene fluoride polymer 4, the mixture was prepared in the same manner as in Production Example 3, except that a vinylidene fluoride polymer powder was used in place of the binder composition, and the amount of NMP added was adjusted so that the nonvolatile content concentration of the slurry was the N. V. value described in Table 3 in the secondary kneading step. The sample temperature after the addition of the vinylidene fluoride polymer powder was 25°C or higher and lower than 30°C.

Production Example 4: Production of electrode

Each of the electrode mixtures obtained in Production Example 3 was used to coat a 15 $\mu$m aluminum foil using a coater dryer GT-3 available from THANK METAL CO., LTD. and dried, and therefore, an electrode was obtained. The drying furnace comprised three zones with a furnace length of 1 m, and the temperature in each drying furnace was set to 110°C. The coating was performed in a comma reverse manner, and a plurality of electrodes were intermittently coated at a coating speed of 0.6 m per minute by changing the gap distance with a coating width of 60 mm and a coating length of 30 cm. The first patterned electrode at the start of coating was discarded. An electrode having a one-side loading of 200 $\pm$ 20 g/m$^2$ was used as an evaluation electrode. The electrode was cut off at both ends to form a width of 50 mm.

Evaluation Example 2

[Measurement of viscosity of electrode mixture]

The measurement was performed using an E-type viscometer ("RE550R type" available from Toki Sangyo Co., Ltd.) using a rotor having a size of 3° $\times$ R14 at 25°C and a shear rate of 2 s$^{-1}$ for 300 seconds. The viscosity value after 300 seconds was used as the viscosity of the electrode mixture.

[Measurement of complex viscosity of electrode mixture]

For the measurement, a G2 rheometer available from TA Instruments was used, and a gap distance was set to 0.5 mm using a 50 mm parallel plate. A solvent trap kit was used to prevent volatilization of the solvent by heating. The complex viscosity of the electrode mixture at each sample temperature was measured while the temperature was increased from 25°C to 80°C at a rate of 5°C per minute at a strain of 0.2% and an angular frequency of 10 rad/s, and TC10 was determined as a temperature at which the complex viscosity became equal to 10 times as great as the value of the complex viscosity at 30°C.

[Evaluation of coated end shape of electrode]

The coated end shape at the start of coating was evaluated for the electrode mixture layer prepared by intermittent coating using a coater dryer. The case where the length of blur or defective coating portion occurred in the coating direction at the coating start end (hereinafter abbreviated as "coating end strain" in some cases) was less than 2 mm was evaluated as good, the case where it was less than 5 mm was evaluated as possible, and the case where it was 5 mm or greater was evaluated as poor.

[Evaluation of smoothness of electrode]

The smoothness of the dried coating electrode described above was evaluated using a desktop offline sheet thickness measuring system TOF-5R01 available from Yamabun Electronics Co., Ltd. The electrode was cut out to a length of 10 cm in the coating direction and a width of 5 cm perpendicular thereto. A probe was abutted against this test piece on the electrode-coated surface side, and the thickness was measured over a length of 4 cm at a 1 mm pitch in the longitudinal direction. The coefficient of variation was determined for the obtained thickness data of 41 points. The case where the obtained coefficient of variation was less than 10% was evaluated as good, the case where it was 10% or greater and less than 20% was evaluated as possible, and the case where it was 20% or greater was evaluated as poor.

[Evaluation of peel strength of electrode]

The peel strength of the dried coating electrode described above was determined by bonding the electrode coating film surface and the plastic thick plate (made of acrylic resin, thickness: 5 mm) with double-sided tape and performing a 90° peel strength test in accordance with JIS K6854-1. The test speed was 10 mm per minute.

Table 3 shows the evaluation results of the binder composition, electrode mixture, and electrode. In Table 3, "N. V." indicates a non-volatile content concentration. Also, "N. D" indicates that in the test range, the temperature has not reached the temperature at which the complex viscosity becomes equal to 10 times as great as the value of the complex viscosity at 30°C. "Mod" indicates Mod-PVDF1, and the compounding ratio (resin component ratio) indicates the ratio of the binder/dispersion stabilizer. For the peel strength, "-" indicates that the evaluation has not been performed.

[Table 3]

| | Polymer powder B (dispersion stabilizer) | Compounding ratio (A/B) | Method of compounding polymer powder A | Electrode mixture | | | Electrode | | |
|---|---|---|---|---|---|---|---|---|---|
| | | | | N.V. | Viscosity 25°C | TC10 | Peel strength | End Linearity | Smoothness |
| | | | | % | Pa·s | °C | gf/mm | - | - |
| 1 | Mod | 50/50 | Dispersion | 74.0 | 7.0 | 50.0 | 2.1 | Good | 1.9% |
| 2 | Mod | 50/50 | Dispersion | 75.0 | 8.1 | 56.3 | 2.5 | Good | 2.5% |
| 3 | Mod | 50/50 | Dispersion | 73.2 | 5.4 | 52.8 | 2.4 | Good | 2.0% |
| 4 | Mod | 50/50 | Powder | 74.0 | 5.8 | 55.8 | 1.8 | Good | 7.7% |
| 5 | Mod | 50/50 | Dispersion | 75.0 | 7.5 | 56.6 | 2.6 | Good | 3.0% |
| 6 | Mod | 50/50 | Dispersion | 75.0 | 7.9 | 55.1 | 1.7 | Good | 2.9% |
| 7 | Mod | 50/50 | Dispersion | 72.0 | 7.0 | 58.5 | 2.2 | Good | 4.1% |
| 8 | Mod | 50/50 | Dispersion | 75.0 | 6.8 | 59.5 | 2.6 | Good | 9.1% |
| 9 | Mod | 25/75 | Dispersion | 73.0 | 8.9 | 61.2 | 2.6 | Good | 3.0% |
| 10 | Mod | 75/25 | Dispersion | 77.9 | 7.7 | 58.1 | 1.7 | Good | 3.2% |
| 11 | Mod | 90/10 | Dispersion | 78.0 | 11.3 | 58.6 | 1.8 | Possible | 5.0% |
| 12 | Mod | 100/0 | Solution | 70.0 | 8.3 | N.D. | 0.8 | Good | 2.8% |
| 13 | Mod | 50/50 | Solution | 71.0 | 7.0 | N.D. | 1.8 | Good | 1.9% |
| 14 | Mod | 50/50 | Dispersion | 74.5 | 8.1 | 43.8 | 2.3 | Good | 2.2% |
| 15 | Mod | 50/50 | Dispersion | 75.0 | 8.5 | 47.4 | 2.4 | Good | 1.5% |
| 16 | Mod | 100/0 | Solution | 70.0 | 6.4 | N.D. | 1.5 | Good | 1.3% |
| 17 | Mod | 50/50 | Dispersion | 75.0 | 6.0 | 59.7 | - | Good | 21.5% |

As for the electrode mixtures using vinylidene fluoride polymer powders 1 to 11, TC10 was 50°C or higher, which was a high temperature. As for the electrode mixtures using the vinylidene fluoride polymer powders 12 to 13, and 16, the temperature in the test range did not reach the temperature at which the complex viscosity became equal to 10 times as great as the value of the complex viscosity at 30°C. As for the electrode mixtures using vinylidene fluoride polymer powders 14 to 15, TC10 was 48°C or lower. As for the electrode mixture using the vinylidene fluoride polymer powder 17, TC10 was 59.7°C, but it was found that the D50 value of the vinylidene fluoride polymer powder was large, the smoothness of the obtained electrode was 20% or higher (poor), and the electrode mixture was not excellent.

From the above results, it was found that by using as a binder the vinylidene fluoride polymer powder having a median diameter of 50 μm or less obtained by heating at a temperature of the melting point or higher, an electrode mixture of which TC10 was a high temperature and an increase in viscosity was inhibited was obtained. Furthermore, it was found that the electrode obtained by coating and drying the electrode had less strain at the coating end portion and excellent smoothness of the electrode.

Industrial Applicability

The present invention can be utilized as an electrode mixture to coat a current collector in the production of an electrode of a lithium-ion secondary battery.

**Claims**

1. A vinylidene fluoride polymer powder having a median diameter of 50 μm or less as determined by the particle size (D50) at an integrated value of 50 % in a volume-based particle size distribution determined by a wet laser diffraction scattering method,

    wherein the vinylidene fluoride polymer powder has a maximum melting peak temperature Tm1 of 130°C or higher at a first heating in differential scanning calorimetry, determined according to the method disclosed in the description, and
    when a shear viscosity is defined as a value measured at a shear rate of 100 s$^{-1}$ using a parallel plate rheometer while heating is performed from 25°C to 80°C at a temperature increasing rate of 5°C/min, determined according to the method disclosed in the description,
    a temperature at which a shear viscosity of a dispersion obtained by dispersing the vinylidene fluoride polymer powder in N-methylpyrrolidone at a concentration of 6 wt.% becomes equal to 5 times as great as a shear viscosity thereof at 30°C, is 44°C or higher and lower than 80°C.

2. The vinylidene fluoride polymer powder according to claim 1, wherein in a differential scanning calorimetry curve obtained at a first heating in a differential scanning calorimetry, when a peak area on a lower temperature side than a maximum melting peak temperature Tm2 at a second heating in the differential scanning calorimetry is ΔH1, and a peak area on a higher temperature side than Tm2 is ΔH2, a ratio from ΔH2 to ΔH1, namely ΔH2/ΔH1, is 0.3 or greater and 3 or less, determined according to the method disclosed in the description.

3. The vinylidene fluoride polymer powder according to claim 2, wherein a relationship between the Tm1 and the Tm2 satisfies Tm2 + 2°C ≤ Tm1 ≤ Tm2 + 20°C.

4. A method of producing the vinylidene fluoride polymer powder described in any one of claims 1 to 3 comprising:

    a preparation step of preparing an untreated vinylidene fluoride polymer powder that has not been heated; and
    a heating step of heating the untreated vinylidene fluoride polymer powder at a temperature of Tm °C or higher when a maximum melting peak temperature of the untreated vinylidene fluoride polymer powder at a first heating in a differential scanning calorimetry is Tm, determined according to the method disclosed in the description.

5. A method for producing a vinylidene fluoride polymer granule comprising a granulation step of performing granulation using the vinylidene fluoride polymer powder described in any one of claims 1 to 3 by a dry granulation method.

6. A method for producing a vinylidene fluoride polymer granule comprising a granulation step of performing granulation using the vinylidene fluoride polymer powder described in any one of claims 1 to 3 by a wet granulation method, wherein in the granulation step, at least one binding agent selected from the group consisting of polyvinylidene fluoride, polyacrylonitrile, nitrile rubber, poly(meth)acrylic acid and esters thereof, polyvinylpyrrolidone, polyvinyl alcohol, polyvinyl acetal, polyvinyl butyral, and cellulose ether is used.

7. A binder composition comprising the vinylidene fluoride polymer powder described in any one of claims 1 to 3 and a dispersion medium comprising an aprotic polar solvent.

8. An electrode mixture comprising the vinylidene fluoride polymer powder described in any one of claims 1 to 3; an active material; and a dispersion medium comprising an aprotic polar solvent.

9. The electrode mixture according to claim 8, wherein the active material is a lithium composite metal oxide.

10. A method for producing an electrode comprising:

a preparation step of preparing the electrode mixture described in claim 8 or 9; and
a coating step of coating a current collector with the electrode mixture,
the preparation step comprising a mixing step of mixing the vinylidene fluoride polymer powder with the active material or the active material and the dispersion medium,
a temperature of the electrode mixture being maintained at a temperature of a melting point or higher of a maximum component constituting the dispersion medium and 60°C or lower during a time from the mixing step to the coating step.

11. The method for producing an electrode according to claim 10, wherein in the preparation step, the electrode mixture comprises a dispersion stabilizer having at least one polymer selected from the group consisting of polyvinylidene fluoride, polyacrylonitrile, nitrile rubber, poly(meth)acrylic acid and esters thereof, polyvinylpyrrolidone, polyvinyl alcohol, polyvinyl acetal, polyvinyl butyral, and cellulose ether, dissolved in a dispersion medium.

12. The method for producing an electrode according to claim 10 or 11, wherein, in the preparation step, a dispersion in which the vinylidene fluoride polymer powder has been dispersed in advance in the dispersion medium is mixed with the active material or a dispersion comprising the active material.

13. The method for producing an electrode according to claim 10 or 11, wherein, in the preparation step, the active material or the dispersion comprising the active material is mixed with the vinylidene fluoride polymer powder.

**Patentansprüche**

1. Vinylidenfluoridpolymerpulver mit einem mittleren Durchmesser von 50 μm oder weniger, bestimmt durch die Partikelgröße (D50) bei einem integrierten Wert von 50 % in einer volumenbasierten Partikelgrößenverteilung, die durch ein Nasslaserbeugungsstreuungsverfahren bestimmt wurde, wobei das Vinylidenfluoridpolymerpulver eine maximale Schmelzpeaktemperatur Tm1 von 130 °C oder mehr bei einer ersten Erwärmung in der Differentialscanningkalorimetrie aufweist, bestimmt gemäß dem in der Beschreibung offenbarten Verfahren, und

wenn eine Scherviskosität als ein Wert definiert ist, der bei einer Schergeschwindigkeit von 100 s$^{-1}$ unter Verwendung eines Parallelplattenrheometers gemessen wird, während ein Erhitzen von 25 °C auf 80 °C mit einer Temperaturanstiegsgeschwindigkeit von 5 °C/min durchgeführt wird, bestimmt gemäß dem in der Beschreibung offenbarten Verfahren, eine Temperatur, bei der eine Scherviskosität einer Dispersion, die durch Dispergieren des Vinylidenfluoridpolymerpulvers in N-Methylpyrrolidon bei einer Konzentration von 6 Gew.-% erhalten wird, gleich dem Fünffachen ihrer Scherviskosität bei 30 °C wird, 44 °C oder höher und niedriger als 80 °C ist.

2. Vinylidenfluoridpolymerpulver nach Anspruch 1, wobei in einer Differentialscanningkalorimetriekurve, die bei einer ersten Erwärmung in einer Differentialscanningkalorimetrie erhalten wird, wenn eine Peakfläche auf einer niedrigeren Temperaturseite als eine maximale Schmelzpeaktemperatur Tm2 bei einer zweiten Erwärmung in der Differentialabtastkalorimetrie ΔH1 ist, und eine Peakfläche auf einer höheren Temperaturseite als Tm2 ΔH2 ist, ein Verhältnis von ΔH2 zu ΔH1, nämlich ΔH2/ΔH1, 0,3 oder größer und 3 oder kleiner ist, bestimmt nach dem in der Beschreibung offenbarten Verfahren.

3. Vinylidenfluoridpolymerpulver nach Anspruch 2, wobei eine Beziehung zwischen Tm1 und Tm2 die Bedingung Tm2 + 2 °C ≤ Tm1 ≤ Tm2 + 20 °C erfüllt.

4. Verfahren zum Herstellen des in einem der Ansprüche 1 bis 3 beschriebenen Vinylidenfluoridpolymerpulvers, umfassend:

einen Herstellungsschritt zum Herstellen eines unbehandelten Vinylidenfluoridpolymerpulvers, das nicht erhitzt wurde; und
einen Erhitzungsschritt zum Erhitzen des unbehandelten Vinylidenfluoridpolymerpulvers auf eine Temperatur von Tm °C oder höher, wenn eine maximale Schmelzpeaktemperatur des unbehandelten Vinylidenfluoridpolymerpulvers bei einem ersten Erhitzen in einer Differentialscanningkalorimetrie Tm ist, bestimmt gemäß dem in der Beschreibung offengelegten Verfahren.

5. Verfahren zum Herstellen eines Vinylidenfluoridpolymergranulats, umfassend einen Granulierungsschritt des Durchführens einer Granulierung unter Verwendung des in einem der Ansprüche 1 bis 3 beschriebenen Vinylidenfluoridpolymerpulvers durch ein Trockengranulierungsverfahren.

6. Verfahren zum Herstellen eines Vinylidenfluoridpolymergranulats, umfassend einen Granulierungsschritt des Durchführens einer Granulierung unter Verwendung des in einem der Ansprüche 1 bis 3 beschriebenen Vinylidenfluoridpolymerpulvers durch ein Nassgranulierungsverfahren,
wobei im Granulierungsschritt mindestens ein Bindemittel ausgewählt aus der Gruppe bestehend aus Polyvinylidenfluorid, Polyacrylnitril, Nitrilkautschuk, Poly(meth)acrylsäure und deren Ester, Polyvinylpyrrolidon, Polyvinylalkohol, Polyvinylacetal, Polyvinylbutyral und Celluloseether verwendet wird.

7. Bindemittelzusammensetzung, umfassend das in einem der Ansprüche 1 bis 3 beschriebene Vinylidenfluoridpolymerpulver und ein Dispersionsmedium, das ein aprotisches polares Lösungsmittel umfasst.

8. Elektrodenmischung, umfassend das in einem der Ansprüche 1 bis 3 beschriebene Vinylidenfluoridcopolymerpulver; ein aktives Material; und ein Dispersionsmedium, das ein aprotisches polares Lösungsmittel umfasst.

9. Elektrodenmischung nach Anspruch 8, wobei das aktive Material ein Lithiumverbundmetalloxid ist.

10. Verfahren zum Herstellen einer Elektrode, umfassend:

einen Herstellungsschritt zum Herstellen der in Anspruch 8 oder 9 beschriebenen Elektrodenmischung; und
einen Beschichtungsschritt zum Beschichten eines Stromkollektors mit der Elektrodenmischung,
wobei der Herstellungsschritt einen Mischschritt des Mischens des Vinylidenfluoridpolymerpulvers mit dem aktiven Material oder dem aktiven Material und dem Dispersionsmedium umfasst,
wobei die Temperatur der Elektrodenmischung auf einer Temperatur gehalten wird, die einem Schmelzpunkt einer das Dispersionsmedium bildenden Maximalkomponente entspricht oder höher ist, und 60 °C oder niedriger ist während einer Zeitspanne von dem Mischschritt bis zum Beschichtungsschritt.

11. Verfahren zum Herstellen einer Elektrode nach Anspruch 10, wobei im Herstellungsschritt die Elektrodenmischung einen Dispersionsstabilisator mit mindestens einem Polymer ausgewählt aus der Gruppe bestehend aus Polyvinylidenfluorid, Polyacrylnitril, Nitrilkautschuk, Poly(meth)acrylsäure und deren Estern, Polyvinylpyrrolidon, Polyvinylalkohol, Polyvinylacetal, Polyvinylbutyral und Celluloseether, gelöst in einem Dispersionsmedium, umfasst.

12. Verfahren zum Herstellen einer Elektrode nach Anspruch 10 oder 11, wobei in dem Herstellungsschritt eine Dispersion, in der das Vinylidenfluoridpolymerpulver vorab im Dispersionsmedium dispergiert wurde, mit dem Aktivmaterial oder einer das Aktivmaterial umfassenden Dispersion vermischt wird.

13. Verfahren zum Herstellen einer Elektrode nach Anspruch 10 oder 11, wobei in dem Herstellungsschritt das Aktivmaterial oder die das Aktivmaterial umfassende Dispersion mit dem Vinylidenfluoridpolymerpulver vermischt wird.

**Revendications**

1. Poudre de polymère de fluorure de vinylidène ayant un diamètre médian de 50 $\mu$m ou moins tel que déterminé par la taille de particules (D50) à une valeur intégrée de 50 % dans une distribution de taille des particules en fonction du volume déterminée par un procédé de diffusion par diffraction laser humide, dans laquelle la poudre de polymère de fluorure de vinylidène a une température maximale de pic de fusion Tm1 de 130 °C ou plus élevée lors d'un premier chauffage dans une calorimétrie différentielle à balayage, déterminée selon le procédé décrit dans la description, et

lorsqu'une viscosité sous cisaillement est définie comme une valeur mesurée à un taux de cisaillement de 100 s⁻¹ à l'aide d'un rhéomètre à plaques parallèles alors qu'un chauffage est mis en oeuvre de 25 °C à 80 °C à une vitesse de montée en température de 5 °C/min, déterminée selon le procédé décrit dans la description, une température à laquelle une viscosité sous cisaillement d'une dispersion obtenue en dispersant la poudre de polymère de fluorure de vinylidène dans de la N-méthylpyrrolidone à une concentration de 6 % en poids devient égale à 5 fois une viscosité sous cisaillement de celle-ci à 30 °C, est de 44 °C ou plus élevée et inférieure à 80 °C.

2. Poudre de polymère de fluorure de vinylidène selon la revendication 1, dans laquelle dans une courbe de calorimétrie différentielle à balayage obtenue lors d'un premier chauffage dans une calorimétrie différentielle à balayage, lorsqu'une aire de pic sur un côté de température plus basse qu'une température maximale de pic de fusion Tm2 lors d'un second chauffage dans la calorimétrie différentielle à balayage est $\Delta H1$, et qu'une aire de pic sur un côté de température plus élevée que Tm2 est $\Delta H2$, un rapport de $\Delta H2$ à $\Delta H1$, à savoir $\Delta H2/\Delta H1$, vaut 0,3 ou plus et 3 ou moins, déterminé selon le procédé décrit dans la description.

3. Poudre de polymère de fluorure de vinylidène selon la revendication 2, dans laquelle une relation entre la Tm1 et la Tm2 respecte Tm2 + 2 °C ≤ Tm1 ≤ Tm2 + 20 °C.

4. Procédé de production de la poudre de polymère de fluorure de vinylidène décrite dans l'une quelconque des revendications 1 à 3 comprenant :

une étape de préparation consistant à préparer une poudre de polymère de fluorure de vinylidène non traitée qui n'a pas été chauffée ; et
une étape de chauffage consistant à chauffer la poudre de polymère de fluorure de vinylidène non traitée à une température de Tm °C ou plus élevée lorsqu'une température maximale de pic de fusion de la poudre de polymère de fluorure de vinylidène non traitée lors d'un premier chauffage dans une calorimétrie différentielle à balayage vaut Tm, déterminée selon le procédé décrit dans la description.

5. Procédé permettant de produire un granulé de polymère de fluorure de vinylidène comprenant une étape de granulation consistant à mettre en oeuvre une granulation à l'aide de la poudre de polymère de fluorure de vinylidène décrite dans l'une quelconque des revendications 1 à 3 par un procédé de granulation à sec.

6. Procédé permettant de produire un granulé de polymère de fluorure de vinylidène comprenant une étape de granulation consistant à mettre en oeuvre une granulation à l'aide de la poudre de polymère de fluorure de vinylidène décrite dans l'une quelconque des revendications 1 à 3 par un procédé de granulation humide.
dans lequel dans l'étape de granulation, au moins un agent de liaison choisi dans le groupe constitué par polyfluorure de vinylidène, polyacrylonitrile, caoutchouc nitrile, acide poly(méth)acrylique et esters de celui-ci, polyvinylpyrrolidone, alcool polyvinylique, acétal polyvinylique, butyral polyvinylique et éther de cellulose est utilisé.

7. Composition de liant comprenant la poudre de polymère de fluorure de vinylidène décrite dans l'une quelconque des revendications 1 à 3 et un milieu de dispersion comprenant un solvant polaire aprotique.

8. Mélange pour électrode comprenant la poudre de polymère de fluorure de vinylidène décrite dans l'une quelconque des revendications 1 à 3 ; un matériau actif ; et un milieu de dispersion comprenant un solvant polaire aprotique.

9. Mélange pour électrode selon la revendication 8, dans lequel le matériau actif est un oxyde métallique composite de lithium.

10. Procédé permettant de produire une électrode comprenant :

une étape de préparation consistant à préparer le mélange pour électrode décrit dans la revendication 8 ou 9 ; et
une étape de revêtement consistant à revêtir un collecteur de courant avec le mélange pour électrode,
l'étape de préparation comprenant une étape de mélange consistant à mélanger la poudre de polymère de fluorure de vinylidène avec le matériau actif ou le matériau actif et le milieu de dispersion,
une température du mélange pour électrode étant maintenue à une température d'un point de fusion ou plus élevée d'un composant maximal constituant le milieu de dispersion et de 60 °C ou plus basse pendant un temps allant de l'étape de mélange à l'étape de revêtement.

11. Procédé permettant de produire une électrode selon la revendication 10, dans lequel dans l'étape de préparation, le mélange pour électrode comprend un stabilisateur de dispersion ayant au moins un polymère choisi dans le groupe constitué par polyfluorure de vinylidène, polyacrylonitrile, caoutchouc nitrile, acide poly(méth)acrylique et esters de celui-ci, polyvinylpyrrolidone, alcool polyvinylique, acétal polyvinylique, butyral polyvinylique et éther de cellulose, dissous dans un milieu de dispersion.

12. Procédé permettant de produire une électrode selon la revendication 10 ou 11, dans lequel, dans l'étape de préparation, une dispersion dans laquelle la poudre de polymère de fluorure de vinylidène a été dispersée à l'avance dans le milieu de dispersion est mélangée avec le matériau actif ou une dispersion comprenant le matériau actif.

13. Procédé permettant de produire une électrode selon la revendication 10 ou 11, dans lequel, dans l'étape de préparation, le matériau actif ou la dispersion comprenant le matériau actif est mélangé avec la poudre de polymère de fluorure de vinylidène.

FIG. 1

FIG. 1

**EP 3 851 490 B1**

**Patent documents cited in the description**

- WO 2011052666 A

- WO 2011052669 A